# EUROPÄISCHE PATENTSCHRIFT

(11) **EP 0 906 584 B1**
(45) Veröffentlichungstag und Bekanntmachung des Hinweises auf die Patenterteilung: **17.04.2002**
(21) Anmeldenummer: 97925878.7
(22) Anmeldetag: 28.05.1997
(51) Int. Cl.: G02B 6/44, H01B 17/00

(54) **ANORDNUNG ZUM ÜBERTRAGEN VON LICHT ZWISCHEN ZWEI AUF UNTERSCHIEDLICHEM ELEKTRISCHEM POTENTIAL LIEGENDEN ORTEN UND VERFAHREN ZUM HERSTELLEN EINER SOLCHEN ANORDNUNG**
DEVICE FOR TRANSMITTING LIGHT BETWEEN TWO POINTS WITH A DIFFERENT ELECTRIC POTENTIAL AND PROCESS FOR MANUFACTURING SUCH A DEVICE
DISPOSITIF DE TRANSMISSION DE LUMIERE ENTRE DEUX ENDROITS SITUES A DES POTENTIELS ELECTRIQUES DIFFERENTS ET PROCEDE DE FABRICATION DE CE DISPOSITIF

(30) Priorität: 17.06.1996 DE 19624091
(43) Veröffentlichungstag der Anmeldung: 07.04.1999
(73) Patentinhaber: SIEMENS AKTIENGESELLSCHAFT, 80333 München (DE)
(72) Erfinder: GROSS, Walter, D-91074 Herzogenaurach (DE); HAIN, Stefan, D-91090 Effeltrich (DE); KOCH, Norbert, D-51147 Köln (DE)
(86) Internationale Anmeldenummer: DE9701078
(87) Internationale Veröffentlichungsnummer: WO9748996

(56) Entgegenhaltungen:
- DD-A- 300 495
- DE-A- 2 901 872
- DE-C- 4 227 410
- DE-U- 9 413 136
- US-A- 5 090 793

## Beschreibung

Anordnung zum Übertragen von Licht zwischen zwei auf unterschiedlichem elektrischem Potential liegenden Orten und Verfahren zum Herstellen einer solchen Anordnung

Die Erfindung betrifft eine Anordnung zum Übertragen von Licht zwischen zwei auf unterschiedlichem elektrischem Potential liegenden Orten. Die Erfindung betrifft ferner ein Verfahren zum Herstellen einer Anordnung zum Übertragen von Licht zwischen zwei auf unterschiedlichem elektrischem Potential liegenden Orten.

Zur Messung physikalischer Größen wie beispielsweise elektrischem Strom oder elektrischer Spannung auf Hochspannungspotential müssen die Meßsignale von zum Messen der Größen vorgesehenen Sensoren potentialgetrennt auf Erdpotential übertragen werden. Eine potentialfreie Übertragung der Meßsignale ist bekanntlich in Form von optischen Signalen über Lichtwellenleiter möglich, die vom Hochspannungspotential auf Erdpotential geführt sind. Es sind auch Systeme bekannt, bei denen außer den Meßsignalen auch die Energie für die auf der Hochspannungsseite befindlichen Sensoren optisch über Lichtwellenleiter übertragen wird.

Die Lichtwellenleiter müssen vor mechanischen Beanspruchungen geschützt werden. Ferner müssen für die elektrische Isolation eine ausreichend große elektrische Durchschlagsweite und im allgemeinen auch ein ausreichend großer elektrischer Kriechweg zwischen der Hochspannungsseite und der Erdpotentialseite gewährleistet sein.

Aus *EP-B-0 265* 737 ist eine Anordnung zum Übertragen der Meßsignale eines auf Hochspannungspotential liegenden Stromwandlers auf Erdpotential in Form optischer Signale bekannt. Diese bekannte Anordnung umfaßt einen vertikal vom Stromwandler zum auf Erdpotential liegenden Boden verlaufenden, rohrförmigen Hochspannungsisolator aus Keramik oder glasfaserverstärktem Kunststoff (GFK) und einen oder mehrere Lichtleiter in einem Lichtleiterkabel, das spiralförmig durch einen Innenraum des Hochspannungsisolators geführt ist. Über die Lichtleiter werden die optischen Meßsignale übertragen. Der Innenraum des Hochspannungsisolators kann mit Luft oder mit einem Isoliergas wie Stickstoff (N₂) oder Schwefelhexafluorid (SF₆) gefüllt sein. In einer anderen Ausführungsform dieser bekannten Anordnung ist das Lichtleiterkabel spiralförmig außen auf das Isolatorrohr aufgewickelt und in eine aufgegossene Silikonschicht eingebettet oder sogar vollständig von der Silikonschicht umhüllt. Mit der Silikonschicht sind außerdem Silikonschirme zur Verlängerung des Oberflächenkriechweges gebildet. Bei der aus der *EP-B-0 265 737* bekannten Anordnung muß in der Ausführungsform mit Isoliergas bei Undichtigkeiten, beispielsweise bei Montagearbeiten, das Isoliergas nachgefüllt werden. Bei der Einbettung des Lichtleiterkabels in Silikon können Probleme an der Grenzfläche zwischen dem Silikon und dem Lichtleiterkabel entstehen durch thermische Volumenänderungen des Silikons bei Temperaturänderungen. Diese Volumenänderungen können zu Längsspalten im Silikon entlang des Lichtleiterkabels führen, in die Feuchtigkeit eindringen kann. Dadurch kann es zu Gleitentladungen kommen.

In der *DE 42 27 410 C1* wird eine Anordnung zum Übertragen von Licht zwischen zwei auf unterschiedlichem Potential liegenden Orten beschrieben. Dazu ist ein mit einem Lichtwellenleiter spiralförmig bewickeltes Stützrohr innerhalb eines Isolators angeordnet. Der Innenraum des Stützrohrs und der Zwischenraum zwischen dem Stützrohr und der Innenwand des Isolators ist mit einem Kunststoffschaum befüllt.

Bei einer weiteren aus der *DD 300 495 A* bekannten Anordnung zur Lichtübertragung zwischen zwei auf unterschiedlichem Potential liegenden Orten ist ein Lichtwellenleiter durch den mit einem Kunststoffschaum befüllten Innenraum eines Isolators geführt. Der Lichtwellenleiter ist durch Distanzstücke innerhalb des Isolators positioniert. Auch bei den beiden letztgenannten Anordnungen besteht die vorstehend beschriebene Gefahr der Längsspaltbildung.

Der Erfindung liegt nun die Aufgabe zugrunde, eine Anordnung zum Übertragen von Licht zwischen zwei auf unterschiedlichem elektrischem Potential liegenden Orten und ein Verfahren zum Herstellen einer Anordnung zum Übertragen von Licht zwischen zwei auf unterschiedlichem elektrischem Potential liegenden Orten anzugeben, mit denen die genannten Probleme beim Stand der Technik vermieden werden.

Diese Aufgabe wird gemäß der Erfindung gelöst mit den Merkmalen des Anspruchs 1 bzw. des Anspruchs 3.

Die Anordnung gemäß Anspruch 1 zum Übertragen von Licht zwischen zwei auf unterschiedlichem elektrischem Potential liegenden Orten umfaßt
a) einen zwischen den beiden auf unterschiedlichem Potential liegenden Orten angeordneten Isolator mit einem Innenraum und
b) wenigstens einen durch den Innenraum des Isolators geführten Lichtwellenleiter zum Übertragen des Lichts,
   wobei
c) der Innenraum des Isolators mit Kunststoffschaum gefüllt ist, der den wenigstens einen Lichtwellenleiter umgibt,
d) der Kunststoffschaum mit Schwefelhexafluoridgas (SF₆-Gas) aufgeschäumt ist, und
e) der Kunststoffschaum in einem vorgegebenen Betriebstemperaturbereich unter einem über Atmosphärendruck liegenden Überdruck steht.

Beim Verfahren gemäß Anspruch 3 zum Herstellen einer Anordnung zum Übertragen von Licht zwischen zwei auf unterschiedlichem elektrischem Potential liegenden Orten werden
a) ein Isolator mit einem Innenraum und wenigstens ein Lichtwellenleiter zum Übertragen des Lichts bereitgestellt,
b) der wenigstens eine Lichtwellenleiter durch den Innenraum des Isolators verlegt,
c) der Innenraum des Isolators nach Verlegen des wenigstens einen Lichtwellenleiters mit Kunststoffschaum gefüllt und anschließend abgedichtet,
d) der Kunststoffschaum mit einem Treibgas, das wenigstens teilweise aus Schwefelhexafluoridgas (SF₆-Gas) besteht, aufgeschäumt, und
e) ein über Atmosphärendruck liegender Überdruck in dem Innenraum des Isolators vorgesehen.

Durch das Ausfüllen des Innenraums des Isolators mit Kunststoffschaum erreicht man eine gute elektrische Isolation der beiden Potentialseiten voneinander und einen guten mechanischen Schutz des wenigstens einen Lichtwellenleiters im Innenraum des Isolators. Außerdem kann beispielsweise für Montage- und Wartungsarbeiten der Innenraum des Isolators auch für einige Zeit geöffnet werden, also auf die Druckdichtheit vorübergehend verzichtet werden, da in dem Kunststoffschaum eingeschlossenes Gas nur langsam ausdiffundiert.

Bei dem in dem Kunststoffschaum eingeschlossenen Gas handelt es sich wenigstens teilweise um das elektrisch gut isolierende Schwefelhexafluoridgas (SF₆-Gas). Der mit SF₆-Gas aufgeschäumte Kunststoffschaum weist eine besonders gute Durchschlagsfestigkeit auf.

Weiterhin steht der Kunststoffschaum im Innenraum des Isolators wenigstens über einen vorgegebenen Betriebstemperaturbereich unter einem über Atmosphärendruck (etwa 1 bar = 10⁵ Pa) liegenden Überdruck. Dadurch steht der Kunststoffschaum unter mechanischen Spannungen, die eine zusätzliche Sicherheit gegen die Bildung von Längsspalten im Innenraum des Isolators darstellen. Beim Herstellverfahren wird entsprechend die Kunststoffmasse bereits unter einem über Atmosphärendruck liegenden Überdruck in den Innenraum des Isolators eingebracht. Durch den Überdruck beim Einfüllen der Kunststoffmasse können die Größe der Gasblasen im ausgeschäumten Kunststoff und damit die Dichte des Kunststoffschaumes eingestellt werden.

Vorteilhafte Ausführungsformen der Anordnung und des Herstellverfahrens ergeben sich aus den vom Anspruch 1 bzw. Anspruch 3 abhängigen Ansprüchen.

Der Innenraum des Isolators wird demnach in einer vorteilhaften Ausführungsform des Herstellverfahrens durch Einbringen einer Kunststoffmasse in den Innenraum des Isolators und Aufschäumen dieser Kunststoffmasse, vorzugsweise mit Hilfe eines Treibgases, gefüllt.

Der Überdruck im Innenraum des Isolators kann insbesondere durch Einfüllen von Stickstoffgas in den Innenraum des Isolators eingestellt werden.

Ein besonders vorteilhafter Kunststoffschaum ist Polyurethanschaum. Als Kunststoffmasse wird dann entsprechend eine Polyurethanmasse verwendet.

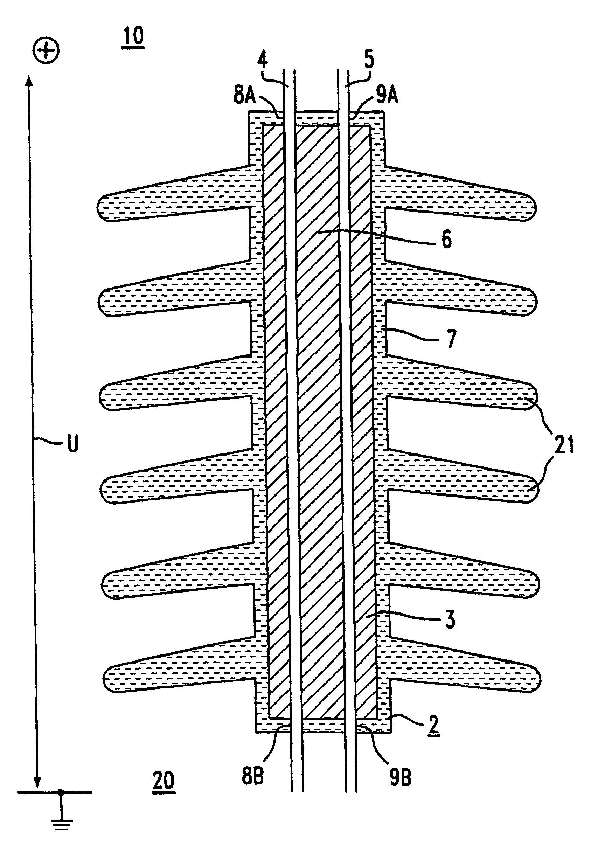

Zur weiteren Erläuterung der Erfindung wird auf die einzige Figur der Zeichnung Bezug genommen, in der ein Ausführungsbeispiel einer Anordnung zum Übertragen von Licht zwischen zwei auf unterschiedlichem elektrischem Potential liegenden Orten schematisch dargestellt ist.

Es sind ein auf einem ersten, gegenüber Erdpotential positiven ("+") elektrischen Potential liegender erster Ort mit 10 und ein auf Erdpotential liegender, zweiter Ort mit 20 bezeichnet. Die zwischen den beiden Orten 10 und 20 herrschende Potentialdifferenz (Spannung) U ist vorzugsweise eine Hochspannung, also typischerweise größer als etwa 1 kV. Zwischen den beiden Orten 10 und 20 wird über Lichtwellenleiter, insbesondere einzelne Lichtleitfasern oder Lichtleitkabel mit meist mehreren Fasern, 4 und 5 Licht übertragen. Eine solche optische Übertragungsstrecke ist insbesondere von Vorteil zum analogen oder digitalen Übertragen von Meßsignalen wenigstens eines am ersten Ort 10 auf Hochspannungspotential befindlichen, nicht dargestellten Sensors (Wandlers) zum Messen einer physikalischen Größe am ersten Ort 10. Ein solcher Sensor kann beispielsweise Meßsignale für einen elektrischen Strom oder eine elektrische Spannung in einem auf dem Hochspannungspotential liegenden Stromleiter oder auch für eine Temperatur liefern. Vorzugsweise ist der erste Lichtwellenleiter 4 zum optischen Übertragen der Meßsignale des nicht dargestellten Sensors vorgesehen und der zweite Lichtwellenleiter 5 zum optischen Übertragen der Energie für den Sensor.

Für eine elektrisch sicher isolierte Führung der Lichtwellenleiter 4 und 5 vom ersten Ort 10 zum zweiten Ort 20 über die zwischen den beiden Orten 10 und 20 herrschende Potentialdifferenz ist ein elektrischer Isolator 2 vorgesehen. Der Isolator 2 weist ein Isolatorgehäuse (Isolatorarmatur) 7 auf, das einen Innenraum 3 druckdicht (hermetisch) umschließt. Das Isolatorgehäuse 7 besteht aus einem rohrförmigen Trägerteil und um dieses Trägerteil untereinander angeordneten Schirmen 21 zum Verlängern des Oberflächenkriechweges für elektrische Kriechströme. Das gesamte Isolatorgehäuse 7 kann aus Porzellan bestehen oder auch aus einem glasfaserverstärkten Kunststoff, wobei die Schirme 21 insbesondere auch aus Silikongel (Silikon) gebildet sein können (Verbundisolator).

An dem oberen, dem ersten Ort 10 zugewandten Ende des Isolatorgehäuses 7 sind jeweils eine druckdichte Durchführung 8A für den ersten Lichtwellenleiter 4 und 9A für den zweiten Lichtwellenleiter 5 vorgesehen. Durch die Durchführungen 8A und 9A verlaufen die Lichtwellenleiter 4 bzw. 5 durch das Isolatorgehäuse 7 in den Innenraum 3 des Isolators 2. Die Lichtwellenleiter 4 und 5 verlaufen durch den gesamten Innenraum 3 bis zum unteren, dem zweiten Ort 20 zugewandten Ende des Isolatorgehäuses 7. An diesem unteren Ende des Isolatorgehäuses 7 sind wieder zwei druckdichte Durchführungen 8B und 9B durch das Isolatorgehäuse 7 vorgesehen, durch die jeweils einer der Lichtwellenleiter 4 bzw. 5 wieder aus dem Innenraum 3 ins Freie geführt ist. Die Durchführungen 8A und 8B sowie 9A und 9B können O-Ring-Dichtungen oder auch mir Silikon abgedichtete Öffnungen sein. Die Lichtwellenleiter 4 und 5 können wie dargestellt im wesentlichen geradlinig durch den Innenraum 3 auf praktisch kürzestem Weg zwischen den beiden Orten 10 und 20 angeordnet sein, können aber auch einen anderen Verlauf nehmen, beispielsweise in Form einer Helix oder Spirale.

Die Lichtwellenleiter 4 und 5 sind im Innenraum 3 innerhalb eines Kunststoffschaums 6 angeordnet, mit dem der gesamte Innenraum 3 des Isolators 2 gefüllt ist. Der Kunststoffschaum 6 fixiert die Lichtwellenleiter 4 und 5 in ihrem vorgegebenen Verlauf und umschließt die Lichtwellenleiter 4 und 5 vollständig.

Der Kunststoffschaum 6 besteht im allgemeinen aus einem oder mehreren Kunststoffen mit Gaseinschlüssen (Poren, Gasblasen). Als Kunststoffschaum 6 kann beispielsweise ein Polypropylenschaum, ein Polyethylenschaum, ein Polystyrolschaum, ein Polyvinylchloridschaum oder auch ein Reaktionsharzschaum, insbesondere ein Polyurethanschaum, verwendet werden, der jeweils in bekannter Weise hergestellt werden kann. Im allgemeinen wird eine Kunststofformmasse (kurz: Kunststoffmasse) mit Hilfe eines physikalischen und/oder eines chemischen Treibmittels zu dem Kunststoffschaum 6 aufgeschäumt. Insbesondere kann das Aufschäumen durch ein Treibgas unterstützt werden, beispielsweise Stickstoff oder ein eventuell halogeniertes Kohlenwasserstoffgas. Ein besonders vorteilhafter Kunststoffschaum 6 ist ein Kunststoffschaum mit SF₆-Gaseinschlüssen, der besonders gut elektrisch isoliert. Dazu wird die Kunststoffmasse mit SF₆-Gas als Treibgas aufgeschäumt.

Eine geeignete Polyurethanmasse für den Kunststoffschaum 6 ist das Produkt mit dem Handelsnamen Gilbatherm von der Firma Rhemania, das vorzugsweise mit SF₆-Gas aufgeschäumt wird.

Der Kunststoffschaum 6 wird vorzugsweise unter einen Überdruck gesetzt, der über dem normalen Luftdruck am Standort der Anordnung liegt. Dadurch brauchen der Kunststoffschaum 6 und die Lichtwellenleiter 4 und 5 sowie die Innenwand des Isolatorgehäuses 7 keine chemischen Verbindungen einzugehen, da allein durch den Überdruck und die dadurch bewirkte mechanische Spannung im Innenraum 3 die Bildung von Längsspalten in Richtung des elektrischen Feldes zwischen den beiden Orten 10 und 20 sicher vermieden wird.

Zum Herstellen der dargestellten Anordnung kann folgendes Verfahren angewandt werden:

In den Innenraum 3 des Isolators 2 werden in einem ersten Verfahrensschritt die Lichtwellenleiter 4 und 5 durch die Durchführungen 8A und 8B bzw. 9A und 9B eingezogen und in die gewünschte Form gebracht.

In den Innenraum 3 des Isolators 2 wird in einem zweiten Verfahrensschritt Stickstoff unter einem vorgegebenen Überdruck gegenüber Atmosphärendruck (1 bar) eingeleitet, beispielsweise unter einem Druck von 3 bar.

In einem dritten Verfahrensschritt wird der die Lichtwellenleitern 4 und 5 umgebende restliche Innenraum 3 des Isolators 2 mit einer Kunststoffmasse, beispielsweise einer Prepolymermasse und vorzugsweise einer Polyurethanformmasse, gefüllt und, vorzugsweise mit SF₆-Gas, aufgeschäumt. Der Stickstoff entweicht weitgehend während des Aufschäumvorgangs. Der mit Hilfe des Stickstoffs eingestellte Überdruck dient zur Einstellung einer gewünschten Größe und Dichte der Gaseinschlüsse im Kunststoffschaum 6. Der Druck wird dabei so gewählt, daß nach dem Aufschäumvorgang in dem Innenraum 3 ein leichter Überdruck verbleibt.

In einem vierten Verfahrensschritt wird der Innenraum 3 druckdicht versiegelt, indem eine zum Einbringen des Stickstoffs und des Kunststoffschaums 6 vorgesehene Öffnung im Isolatorgehäuse 7 und gegebenenfalls auch die Durchführungen 8A, 8B, 9A und 9B druckdicht verschlossen werden.

## Patentansprüche

1. Anordnung zum Übertragen von Licht zwischen zwei auf unterschiedlichem elektrischem Potential liegenden Orten umfassend
a) einen zwischen den beiden auf unterschiedlichem Potential liegenden Orten angeordneten Isolator (2) mit einem Innenraum (3) und
b) wenigstens einen durch den Innenraum (3) des Isolators (2) geführten Lichtwellenleiter (4,5) zum Übertragen des Lichts,
wobei
c) der Innenraum (3) des Isolators (2) mit Kunststoffschaum (6) gefüllt ist, der den wenigstens einen Lichtwellenleiter (4,5) umgibt,
d) der Kunststoffschaum (6) mit Schwefelhexafluoridgas (SF₆-Gas) aufgeschäumt ist, und
e) der Kunststoffschaum (6) in einem vorgegebenen Betriebstemperaturbereich unter einem über Atmosphärendruck liegenden Überdruck steht.

2. Anordnung nach Anspruch 1, bei der der Kunststoffschaum ein Polyurethanschaum (6) ist.

3. Verfahren zum Herstellen einer Anordnung zum Übertragen von Licht zwischen zwei auf unterschiedlichem elektrischem Potential liegenden Orten, bei dem
a) ein Isolator (2) mit einem Innenraum (3) und wenigstens ein Lichtwellenleiter (4,5) zum Übertragen des Lichts bereitgestellt wird,
b) der wenigstens eine Lichtwellenleiter (4,5) durch den Innenraum (3) des Isolators (2) verlegt wird,
c) der Innenraum (3) des Isolators (2) nach Verlegen des wenigstens einen Lichtwellenleiters mit Kunststoffschaum (6) gefüllt wird und anschließend abgedichtet wird,
d) der Kunststoffschaum mit einem Treibgas, das wenigstens teilweise aus Schwefelhexafluoridgas (SF₆-Gas) besteht, aufgeschäumt wird, und
e) ein über Atmosphärendruck liegender Überdruck in dem Innenraum (3) des Isolators (2) vorgesehen wird.

4. Verfahren nach Anspruch 3, bei dem zum Füllen des Innenraums (3) des Isolators (2) in den Innenraum (3) eine Kunststoffmasse eingebracht wird und diese Kunststoffmasse mit dem Treibgas aufgeschäumt wird.

5. Verfahren nach Anspruch 3, bei dem der Überdruck durch Einfüllen von Stickstoffgas in den Innenraum (3) des Isolators (2) erzeugt wird.

6. Verfahren nach einem der Ansprüche 4 und 5, bei dem als Kunststoffmasse eine Polyurethanmasse verwendet wird.

## Claims

1. Arrangement for transmitting light between two locations at different electric potential comprising
a) an insulator (2), which is arranged between the two locations at different potential and has an internal space (3), and
b) at least one optical waveguide (4, 5), led through the internal space (3) of the insulator (2), for transmitting the light,
c) the internal space (3) of the insulator (2) being filled with plastic foam (6), which surrounds the at least one optical waveguide (4, 5),
d) the plastic foam (6) being foamed with sulphur hexafluoride gas (SF gas), and,
e) in a predefined operating temperature range, the plastic foam (6) being under a positive pressure above atmospheric pressure.

2. Arrangement according to Claim 1, in which the plastic foam is a polyurethane foam (6).

3. Method of producing an arrangement for transmitting light between two locations at different electric potential, in which
a) an insulator (2) with an internal space (3) and at least one optical waveguide (4, 5) for transmitting the light are provided,
b) the at least one optical waveguide (4, 5) is laid through the internal space (3) of the insulator (2),
c) the internal space (3) of the insulator (2), after the laying of the at least one optical waveguide, is filled with plastic foam (6) and subsequently sealed,
d) the plastic foam is foamed with a propellant which consists at least partly of sulphur hexafluoride gas (SF₆ gas), and
e) a positive pressure above atmospheric pressure is provided in the internal space (3) of the insulator (2).

4. Method according to Claim 3, in which, in order to fill the internal space (3) of the insulator (2), a plastic compound is introduced into the internal space (3) and this plastic compound is foamed using the propellant.

5. Method according to Claim 3, in which the positive pressure is produced by putting nitrogen gas into the internal space (3) of the insulator (2).

6. Method according to one of Claims 4 and 5, in which a polyurethane compound is used as the plastic compound.

## Revendications

1. Dispositif de transmission de lumière entre deux endroits se trouvant à des potentiels électriques différents comprenant
a) un isolateur (2) qui est interposé entre les deux emplacements se trouvant à des potentiels différents et qui comprend une chambre (3) intérieure et
b) au moins une fibre (4, 5) optique qui passe dans la chambre (3) intérieure de l'isolateur (2) et qui est destinée à la transmission de la lumière,
dans lequel
c) la chambre (3) intérieure de l'isolateur (2) est emplie de mousse (6) en matière plastique qui entoure la au moins une fibre (4, 5) optique,
d) la mousse (6) en matière plastique est mise sous forme de mousse par de l'hexafluorure de soufre gazeux (gaz SF₆) et
e) la mousse (6) en matière plastique est dans une plage de température de fonctionnement prescrite sous une surpression supérieure à la pression atmosphérique.

2. Dispositif suivant la revendication 1, dans lequel la mousse en matière plastique est une mousse (6) de polyuréthanne.

3. Procédé de fabrication d'un dispositif de transmission de lumière entre deux endroits se trouvant à des potentiels électriques différents qui consiste
a) à disposer d'un isolateur (2) ayant une chambre (3) intérieure et au moins une fibre (4, 5) optique de transmission de la lumière,
b) à mettre la au moins une fibre (4, 5) optique dans la chambre (3) intérieure de l'isolateur (2),
c) à emplir la chambre (3) intérieure de l'isolateur (2), après avoir mis la au moins une fibre optique, de mousse (6) de matière plastique et ensuite à la rendre étanche,
d) la mousse de matière plastique étant mise sous forme de mousse par un gaz porogène qui est constitué au moins en partie d'hexafluorure de soufre gazeux (SF₆ gazeux) et
e) à prévoir dans la chambre (3) intérieure de l'isolateur (2) une surpression supérieure à la pression atmosphérique.

4. Procédé suivant la revendication 3, qui consiste, pour remplir la chambre (3) intérieure de l'isolateur, à introduire dans la chambre (3) intérieure une composition de matière plastique et à faire mousser cette composition de matière plastique par la gaz porogène.

5. Procédé suivant la revendication 3, qui consiste à produire la surpression en introduisant de l'azote gazeux dans la chambre (3) intérieure de l'isolateur (2).

6. Procédé suivant l'une des revendications 4 et 5, qui consiste à utiliser comme composition de matière plastique une composition de polyuréthanne.
